# EUROPÄISCHE PATENTANMELDUNG

(11) **EP 1 577 124 A1**
(43) Veröffentlichungstag der Anmeldung: **21.09.2005**
(21) Anmeldenummer: 05005598.7
(22) Anmeldetag: 15.03.2005
(51) Int. Cl.: B60D 1/02

(54) **Kupplungseinrichtung zum Verbinden eines Zugfahrzeuges mit einem Anhänger**

(30) Priorität: 15.03.2004 DE 102004012483
(71) Anmelder: Schnabl, Peter, 80935 München (DE)
(72) Erfinder: Schnabl, Paul, 80995 München (DE)
(74) Vertreter: Schaumburg, Thoenes, Thurn, Landskron

(57) **Zusammenfassung**

Bei einer Kupplungseinrichtung zum Verbinden eines Zugfahrzeuges, insbesondere Ackerschleppers mit einem Anhänger, umfassend einen Kupplungskopf (22) mit einem von diesem abstehenden Lagerzapfen (26), der in einem Lagergehäuse (20) mittels einer Lageranordnung (28, 28) um eine mit der Zapfenachse zusammenfallenden ersten Schwenkachse (30) schwenkbar gelagert ist, wobei die Lageranordnung mindestens ein Wälzlager (28) umfasst, das einen gehäusefesten Außenring (34) und einen auf dem Lagerzapfen (26) sitzenden Innenring (36) hat, ist der Kupplungskopf als manuelle Bolzenkupplung ausgebildet mit einem blockförmigen äußeren Kupplungsteil (24), das mit dem Lagerzapfen (26) verbunden ist, und mit einem inneren Kupplungsteil (46), das in einer der Außenkontur des inneren Kupplungsteils (46) angepassten Aufnahme des äußeren Kupplungsteils (24) um eine zur ersten Schwenkachse (30) senkrechte zweite Schwenkachse (52) schwenkbar gelagert ist und eine senkrecht zur zweiten Schwenkachse (52) gerichtete Bohrung zur Führung eines Kupplungsbolzens (58) hat, dessen Länge so gewählt ist, dass die axialen Endflächen des Kupplungsbolzens (58) im wesentlichen mit der Außenfläche des inneren Kupplungsteiles (46) fluchten.

## Beschreibung

Die Erfindung betrifft eine Kupplungseinrichtung zum Verbinden eines Zugfahrzeuges, insbesondere Ackerschleppers mit einem Anhänger, umfassend einen Kupplungskopf mit einem von diesem abstehenden Lagerzapfen, der in einem Lagergehäuse mittels einer Lageranordnung um eine mit der Zapfenachse zusammenfallende erste Schwenkachse schwenkbar gelagert ist, wobei die Lageranordnung mindestens ein Wälzlager umfasst, das einen gehäusefesten Außenring und einen auf dem Lagerzapfen sitzenden Innenring hat.

Eine Kupplungseinrichtung der vorstehend genannten Art ist beispielsweise aus der DE 199 27 754 A1 bekannt. Bei der dort beschriebenen Anhängekupplung hat die Lageranordnung zwei einseitig wirkende Wälzlager, die gegeneinander angestellt sind und deren Druckkegelspitzen einander entgegengesetzt verlaufen. Eine solche Lageranordnung hat den Vorteil, dass sie bei axial kurzer Bauweise relativ hohe am Kupplungskopf angreifende Stützkräfte aufnehmen kann. Bei der bekannten Anordnung ist der mit dem Lagerzapfen verbundene Kupplungskopf selber nicht näher dargestellt. Die üblichen Anhängekupplungen haben jedoch den Nachteil, dass sie in axialer Richtung relativ lang bauen und dass eine ausreichende Beweglichkeit der Zugdeichsel gegenüber dem Zugfahrzeug nur dadurch erhalten werden kann, dass die mit der Zugdeichsel verbundene Zugöse innerhalb des Kupplungsmauls und gegenüber dem Kupplungsbolzen ein relativ großes Spiel hat. Das führt nicht nur zu einem rascheren Verschleiß der Kupplungsanordnung, sondern beeinträchtigt auch den Fahrkomfort. Gleichzeitig können die Vorzüge der Lageranordnung nicht voll genutzt werden.

Der Erfindung liegt die Aufgabe zugrunde, eine Kupplungseinrichtung der eingangs genannten Art anzugeben, die bei kurzer axialer Bauweise eine weitgehend spielfreie Verbindung zwischen dem Kupplungskopf und einer Zugdeichsel ermöglicht und gleichzeitig einen großen Schwenkwinkel der Zugdeichsel gegenüber dem Zugfahrzeug sowohl um eine vertikale als auch eine horizontale Schwenkachse zulässt.

Diese Aufgabe wird erfindungsgemäß dadurch gelöst, dass der Kupplungskopf als manuelle Bolzenkupplung ausgebildet ist mit einem blockförmigen äußeren Kupplungsteil, das mit dem Lagerzapfen verbunden ist, und mit einem inneren Kupplungsteil, das in einer der Außenkontur des inneren Kupplungsteils angepassten Aufnahme des äußeren Kupplungsteiles um eine zur ersten Schwenkachse senkrechte zweite Schwenkachse schwenkbar gelagert ist und eine senkrecht zur zweiten Schwenkachse gerichtete Bohrung zur Führung eines Kupplungsbolzens hat, dessen Länge so gewählt ist, dass die axialen Endflächen des Kupplungsbolzens im wesentlichen mit der Außenfläche des inneren Kupplungsteiles fluchten.

Bei der erfindungsgemäßen Lösung bildet der Kupplungskopf gleichsam ein Universalgelenk zwischen dem Zugfahrzeug und der Zugdeichsel. Dadurch, dass der Kupplungsbolzen nicht oder kaum über die Außenfläche des inneren Kupplungsteiles hinausragt, behindert der Kupplungsbolzen auch nicht die Schwenkbewegung des inneren Kupplungsteiles gegenüber dem äußeren Kupplungsteil, so dass man dadurch einen großen Schwenkwinkel des inneren Kupplungsteiles und damit der Zugdeichsel gegenüber dem äußeren Kupplungsteil (Fahrzeug) um die zweite Schwenkachse erhält. Durch die kardanische Lagerung der Zugöse gegenüber dem Zugfahrzeug kann die Zugöse zumindest annähernd spielfrei in dem inneren Kupplungsteil und auf dem Kupplungsbolzen gehalten werden, wodurch sich nicht nur der Verschleiß der zueinander bewegten Teile verringert, sondern auch der Fahrkomfort erhöht wird, wobei gleichzeitig eine große Beweglichkeit der Zugdeichsel gegenüber dem Zugfahrzeug erreicht wird.

Vorzugsweise ist die Anordnung so getroffen, dass sich die beiden Schwenkachsen und die Bolzenachse in einem Punkt schneiden. Um das Einkuppeln zu erleichtern, ist es zweckmäßig, wenn das innere Kupplungsteil in dem äußeren Kupplungsteil zwischen zwei Endlagen verschwenkbar und in eine Mittelstellung zwischen den beiden Endlagen vorgespannt ist, in der die Bolzenachse senkrecht zur ersten Schwenkachse gerichtet ist. Die erfindungsgemäße Kupplungsanordnung kann sowohl mit einer horizontal liegenden Zugöse (Achse des Kupplungsbolzens vertikal), als auch einer vertikal stehenden Zugöse (Achse des Kupplungsbolzens horizontal) genutzt werden.

Die Wälzlageranordnung kann an sich beliebig ausgebildet sein und Wälzlager mit kugelförmigen, zylindrischen oder kegelstumpfförmigen Wälzkörpern enthalten, insbesondere kann sie beispielsweise in der in der DE 199 27 754A1 beschriebenen Weise ausgebildet sein.

Die folgende Beschreibung erläutert in Verbindung mit den beigefügten Zeichnungen die Erfindung anhand eines Ausführungsbeispieles. Es zeigen:
- Fig. 1: eine perspektivische Darstellung einer erfindungsgemäßen Kupplungsanordnung in Verbindung mit einem Anhängebock an einem Ackerschlepper,
- Fig. 2: einen Schnitt entlang der Linie II-II in Figur 1, wobei das Lagergehäuse als Flanschlager ausgebildet ist und
- Fig. 3: einen Schnitt entlang der Linie III-III in Figur 2.

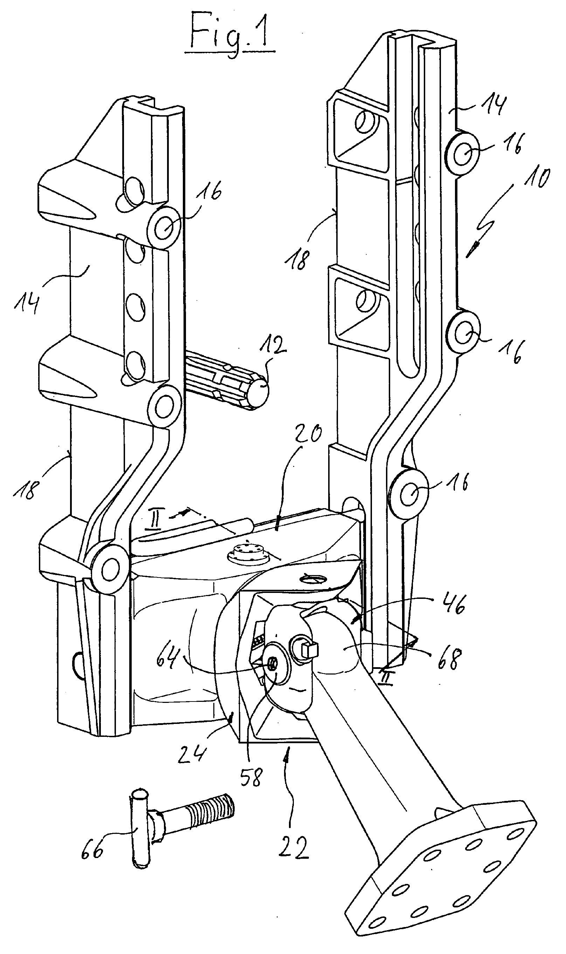

In Figur 1 erkennt man einen allgemein mit 10 bezeichneten Anhängebock der zur Befestigung an dem Heck eines Zugfahrzeugs bestimmt ist, von dem lediglich eine Zapfwelle 12 dargestellt ist. Der Anhängebock 10 umfasst zwei zueinander parallele Seitenwangen 14 mit Führungen 16, mit denen die Seitenwangen 14 an dem Zugfahrzeug befestigt werden können.

In ihrem unteren Endbereich sind die vertikalen Seitenwangen 14 durch eine plattenförmige Brücke 20 verbunden, an der ein allgemein mit 22 bezeichneter Kupplungskopf gelagert ist.

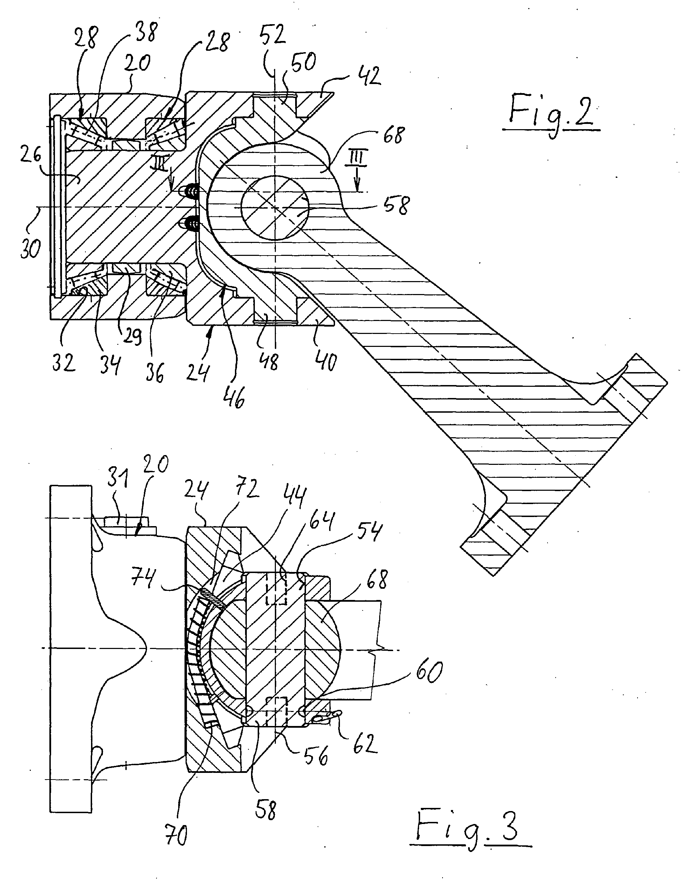

Der Kupplungskopf umfasst ein äußeres Kupplungsteil 24, das gemäß Figur 2 einstückig mit einem Lagerzapfen 26 ausgebildet ist, der in der als Lagergehäuse ausgebildeten Brücke 20 mittels zweier Kegelrollenlager 28 um eine zur Fahrzeuglängsrichtung parallele erste Schwenkachse 30 schwenkbar gelagert ist. Die Lager 28 umfassen jeweils einen in einer Lagerbohrung 32 fest angeordneten Außenring 34 und einen auf dem Lagerzapfen 26 angeordneten Innenring 36, an denen Laufbahnen für Kegelrollen 38 ausgebildet sind. Wie man erkennt, sind die Kegelrollenlager 28 gegeneinander gestellt. Zwischen den Kegelrollenlagern 28 ist ein Bremsring 29 angeordnet, der eine Drehung des Lagerzapfens 26 in dem Lagergehäuse 20 durch Reibung bremst. Die Bremskraft kann in bekannter Weise über nicht näher dargestellte Stellmittel 31 eingestellt werden.

Das blockförmige äußere Kupplungsteil 24 hat zwischen einem unteren Flansch 40 und einem oberen Flansch 42 eine Aufnahme 44 für ein inneres Kupplungsteil 46, das mit einem unteren Lagerzapfen 48 und einem oberen Lagerzapfen 50 zwischen dem unteren Flansch 40 und dem oberen Flansch 42 des äußeren Kupplungsteils 24 um eine zur ersten Schwenkachse 30 senkrechte zweite Schwenkachse 52 schwenkbar gelagert ist, wie dies Figur 2 zeigt. Das innere Kupplungsteil 46 hat eine Bohrung 54 mit zur zweiten Schwenkachse 52 senkrechter Bohrungsachse 56 zur Führung eines manuell einsteckbaren Kupplungsbolzens 58. Der Kupplungsbolzen hat nahe seinem einen Längsende eine Ringnut 60, in die ein Sicherungsstift 62 eingreifen kann, um den Kupplungsbolzen in dem inneren Kupplungsteil 46 festzulegen. Wie man in den Figuren 1 und 3 erkennt, ist der Kupplungsbolzen 58 in seiner Länge so bemessen, dass seine axialen Endflächen zumindest annähernd mit der Außenumfangsfläche des inneren Kupplungsteils 46 fluchten. Um den Kupplungsbolzen 58 aus dem inneren Kupplungsteil 46 herausziehen zu können, hat der Kupplungsbolzen 58 an seinen Längsenden jeweils eine axiale Gewindebohrung 64, in die ein in der Figur 1 dargestelltes Werkzeug 66 eingeschraubt werden kann. Damit kann der Kupplungsbolzen 58 auch dann herausgezogen werden, wenn das innere Kupplungsteil 46 gegenüber dem äußeren Kupplungsteil 24 so verschwenkt ist, dass das eine Ende des Kupplungsbolzens 58 in der Aufnahme 44 des äußeren Kupplungsteiles liegt. Selbstverständlich kann auch eine Bajonettkupplung oder eine andere geeignete Kupplung zwischen dem Werkzeug 66 und dem Kupplungsbolzen gewählt werden.

Wie insbesondere die Figur 2 erkennen lässt, ist die Aufnahme 44 in ihrer Kontur an die Außenkontur des inneren Kupplungsteiles 46 angepasst, so dass sich eine sehr kompakte Anordnung ergibt und der Kupplungsbolzen 58 sehr nah an die Brücke bzw. an das Lagergehäuse 20 herangerückt ist. Wie Figur 1 zeigt, ist die Zugöse 68 für eine vertikale Montage an einer Deichsel eines Anhängers bestimmt, so dass in der Normalstellung des Kupplungskopfes 22 der Kupplungsbolzen 58 horizontal gerichtet ist. Die Schwenkbarkeit der Zugöse 68 um den horizontalen Kupplungsbolzen 58, d.h. die Schwenkbarkeit in einer vertikalen Ebene ermöglicht problemlos einen großen Schwenkwinkel der Zugöse 68 um die horizontale Bohrungs- oder Bolzenachse 56, wie dies Figur 2 erkennen lässt. Der völlig frei liegende Kupplungskopf 22 ermöglicht in Verbindung mit dem schwenkbaren inneren Kupplungsteil 46 einen großen Schwenkwinkel der Zugöse 68 und der mit ihr verbundenen Deichsel um die zweite Schwenkachse 52. Die kompakte Ausbildung der gesamten Verbindungseinrichtung erlaubt in Verbindung mit den Wälzlagern 28 die Aufnahme hoher Stützlasten.

Das innere Kupplungsteil 46 wird durch zwei Federn 70 in seine in der Figur 3 dargestellte Mittellage bezüglich der zweiten Schwenkachse 52 vorgespannt. Die Federn 70 sind jeweils in einer innerhalb der Aufnahme 44 ausgebildeten Nut 72 angeordnet und werden durch einen mit dem inneren Kupplungsteil 46 verbundenen Stift 74 beim Verschwenken des inneren Kupplungsteils 46 gegenüber dem äußeren Kupplungsteil 24 zusammengepresst, so dass sie das innere Kupplungsteil 46 in seine Mittelstellung zurückdrehen, wenn keine äußere Kraft mehr auf das innere Kupplungsteil 46 wirkt.

Bei der in der Figur 1 dargestellten Ausführungsform ist das Lagergehäuse als Brücke dargestellt, welche die beiden Seitenwangen 14 des Anhängebockes 10 miteinander verbindet. Ebenso kann aber das Lagergehäuse 20 gemäß den Figuren 2 und 3 auch als Flanschlager ausgebildetet sein, das an einer Traverse eines Fahrzeugrahmens befestigt wird.

## Patentansprüche

1. Kupplungseinrichtung zum Verbinden eines Zugfahrzeuges, insbesondere Ackerschleppers mit einem Anhänger, umfassend einen Kupplungskopf (22) mit einem von diesem abstehenden Lagerzapfen (26), der in einem Lagergehäuse (20) mittels einer Lageranordnung (28, 28) um eine mit der Zapfenachse zusammenfallenden ersten Schwenkachse (30) schwenkbar gelagert ist, wobei die Lageranordnung mindestens ein Wälzlager (28) umfasst, das einen gehäusefesten Außenring (34) und einen auf dem Lagerzapfen (26) sitzenden Innenring (36) hat, **dadurch gekennzeichnet, dass** der Kupplungskopf als manuelle Bolzenkupplung ausgebildet ist mit einem blockförmigen äußeren Kupplungsteil (24), das mit dem Lagerzapfen (26) verbunden ist, und mit einem inneren Kupplungsteil (46), das in einer der Außenkontur des inneren Kupplungsteils (46) angepassten Aufnahme (44) des äußeren Kupplungsteils (24) um eine zur ersten Schwenkachse (30) senkrechte zweite Schwenkachse (52) schwenkbar gelagert ist und eine senkrecht zur zweiten Schwenkachse (52) gerichtete Bohrung (54) zur Führung eines Kupplungsbolzens (58) hat, dessen Länge so gewählt ist, dass die axialen Endflächen des Kupplungsbolzens (58) im wesentlichen mit der Außenfläche des inneren Kupplungsteiles (46) fluchten.

2. Kupplungseinrichtung nach Anspruch 1, **dadurch gekennzeichnet, dass** sich die beiden Schwenkachsen (30, 52) und die Bolzenachse (56) in einem Punkt schneiden.

3. Kupplungseinrichtung nach Anspruch 1 oder 2, **dadurch gekennzeichnet, dass** das innere Kupplungsteil (46) in dem äußeren Kupplungsteil (24) zwischen zwei Endlagen verschwenkbar und in eine Mittelstellung zwischen den beiden Endlagen vorgespannt ist, in der die Bolzenachse (56) senkrecht zur ersten Schwenkachse (30) gerichtet ist.
